# EUROPEAN PATENT SPECIFICATION

(11) **EP 2 119 730 B1**
(45) Date of publication and mention of the grant of the patent: **10.08.2011**
(21) Application number: 09006086.4
(22) Date of filing: 04.05.2009
(51) Int. Cl.: C08C 19/28, C08L 51/04

(54) **Modified natural rubber, method for producing modified natural rubber, rubber composition, and tire**
Modifizierter Naturkautschuk, Herstellungsverfahren für Naturkautschuk, Kautschukmischung und Reifen
Caoutchouc naturel modifié, procedé de fabrication correspondant, composition de caoutchouc, et pneu

(30) Priority: 13.05.2008 JP 2008126303
(43) Date of publication of application: 18.11.2009
(73) Proprietor: Sumitomo Rubber Industries, Ltd., Hyogo-ken (JP)
(72) Inventor: Ichikawa, Naoya, Kobe-shi Hyogo 651-0072 (JP); Hattori, Takayuki, Kobe-shi Hyogo 651-0072 (JP)
(74) Representative: Manitz, Finsterwald & Partner GbR

(56) References cited:
- WO-A-2005/063836
- CN-A- 101 157 769
- DE-A1- 4 022 629
- JP-A- 2003 055 822
- US-A- 5 232 748

## Description

### BACKGROUND OF THE INVENTION

### Field of the Invention

The present invention relates to a modified natural rubber, a method for producing a modified natural rubber, a rubber composition, and a tire. More particularly, the present invention relates to a modified natural rubber obtained by modifying a natural rubber while heat deterioration of the natural rubber is suppressed and capable of improving the characteristics of rubber products such as tires, a method for producing the modified natural rubber, a rubber composition containing the modified natural rubber, and a tire produced using the rubber composition.

### Description of the Background Art

In recent years, due to increasing environmental awareness, demand for reduction in motor fuel consumption has been growing, which has created the need to produce tires having low rolling resistance. For this reason, there is a demand for development of a rubber composition having a low tan δ (low rolling resistance) as a rubber composition for use in forming a tire tread. Further, such a rubber composition for use in forming a tire tread is required to have not only low rolling resistance but also excellent abrasion resistance and fracture resistance.

In the meantime, oil resources are limited, and the supply of oil resources is decreasing year by year. Therefore, oil prices are expected to soar in future, and the use of components derived from oil resources has limitations. Further, if we face the exhaustion of oil resources, it is conceivable that it will become difficult to produce rubber products, such as tires, constituted from components derived from oil resources. For this reason, in recent years, there is a growing demand for development of techniques for using a natural rubber not derived from oil resources as a rubber component.

An effective way to improve the rolling resistance, abrasion resistance, and fracture resistance of a tire is to improve affinity of a rubber component for fillers, such as carbon black and silica, contained in a rubber composition.

For example, in the case of a synthetic rubber, improvement in affinity of a rubber component for fillers is achieved by terminal modification or copolymerization with a functional group-containing monomer. On the other hand, although a natural rubber is used in large amounts due to its excellent physical properties, it is difficult to modify the natural rubber itself to improve its affinity for fillers.
Patent Document 1: Japanese Patent Laying-Open No. 2003-55822

As a method for modifying a natural rubber, there has been proposed a method in which a polar group-containing compound is added to a solid natural rubber, and then mechanical shear force is applied thereto to graft-polymerize or attach the polar group-containing compound to the solid natural rubber.

However, this method has a problem in that heat is generated from the natural rubber due to application of mechanical shear force and therefore the natural rubber is deteriorated by the heat.

DE 40 22 629 A1 discloses a modified natural rubber grafted with methyl methacrylate and a process for producing such a modified natural rubber, in which a natural rubber latex is in a first step pre-vulcanized by the use of a vulcanization agent or by ionizing radiation, whereafter methyl methacrylate is added thereto and the so obtained mixture is subjected in a second step to a graft polymerization induced by ionizing radiation, such as by gamma rays or x-rays.

CN 101 157 769 A relates to a method for preparing a modified chloroprene rubber, in which chloroprene rubber prepared from waste chloroprene rubber products is mixed with grafting and grinding agents and afterwards grinded in a ball mill, whereafter the mixture is applied into a microwave generator to carry out microwave modification in order to generate a modified rubber powder.

### SUMMARY OF THE INVENTION

In view of the circumstances, it is an object of the present invention to provide a modified natural rubber obtained by modifying a natural rubber while heat deterioration of the natural rubber is suppressed and capable of improving the characteristics of rubber products such as tires, a method for producing the modified natural rubber, a rubber composition containing the modified natural rubber, and a tire produced using the rubber composition.

The present invention provides a modified natural rubber obtained by adding a compound to at least one natural rubber raw material selected from the group consisting of a solid natural rubber, a natural rubber latex, and a natural rubber derivative and then irradiating the mixture of the natural rubber raw material and the compound with microwaves to graft-polymerize or attach the compound to the natural rubber raw material.

Herein, it is preferable that an amount of the compound graft-polymerized or attached to the natural rubber raw material is 0.01% by mass or more but 50% by mass or less of a solid rubber component contained in the natural rubber raw material.

Further, in the modified natural rubber of the present invention, the compound may have a polar group.

Further, the modified natural rubber of the present invention may be a rubber in which a radical forming agent is added together with the compound to the natural rubber raw material to graft-polymerize or attach the compound to the natural rubber raw material by microwave irradiation.

The present invention also provides a method for producing a modified natural rubber, including the steps of: adding a compound to at least one natural rubber raw material selected from the group consisting of a solid natural rubber, a natural rubber latex, and a natural rubber derivative; and irradiating the mixture of the natural rubber raw material and the compound with microwaves to graft-polymerize or attach the compound to the natural rubber raw material.

Further, in the method for producing a modified natural rubber according to the present invention, the compound may have a polar group.

Further, in the method for producing a modified natural rubber according to the present invention, a radical forming agent may be added together with the compound to the natural rubber raw material before microwave irradiation.

The present invention also provides a rubber composition including at least one of: any one of the modified natural rubbers described above and a modified natural rubber produced by any one of the methods for producing a modified natural rubber described above.

Further, the present invention also provides a tire including a tire member formed using the rubber composition described above.

According to the present invention, it is possible to provide a modified natural rubber obtained by modifying a natural rubber while heat deterioration of the natural rubber is suppressed and capable of improving the characteristics of rubber products such as tires, a method for producing the modified natural rubber, a rubber composition containing the modified natural rubber, and a tire produced using the rubber composition.

The foregoing and other objects, features, aspects and advantages of the present invention will become more apparent from the following detailed description of the present invention when taken in conjunction with the accompanying drawings.

### BRIEF DESCRIPTION OF THE DRAWING

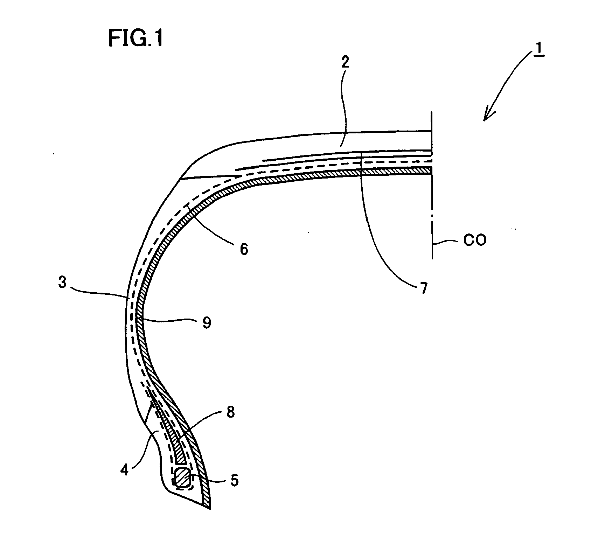

Fig. 1 is a schematic sectional view of the upper-left half of a tire according to one embodiment of the present invention.

### DESCRIPTION OF THE PREFERRED EMBODIMENTS

Hereinbelow, some embodiments of the present invention will be described. It is to be noted that in the accompanying drawing, the same reference numerals indicate the same or similar parts.

### <Natural Rubber Raw Material>

A natural rubber raw material to be used in the present invention contains at least one selected from the group consisting of a solid natural rubber, a natural rubber latex, and a natural rubber derivative.

As the solid natural rubber, a conventionally-known one can be used. Examples of such a solid natural rubber include commercially-available block rubbers (e.g., TSR-10, TSR-20, and TSR-CV) and sheet rubbers (e.g., ribbed smoked sheet (RSS) and pale crepe).

As the natural rubber latex, a conventionally-known one can be used. Examples of such a natural rubber latex include a field latex obtained from natural rubber trees and an ammonia-treated latex (e.g., a high ammonia-type natural rubber latex).

As the natural rubber derivative, a conventionally-known natural rubber or natural rubber latex can be used. Examples of such a natural rubber derivative include epoxidized natural rubbers, epoxidized natural rubber latices, and hydrogenated natural rubbers.

### <Compound>

In the present invention, for example, a polar group-containing compound or a compound containing no polar group can be used as a compound. It is to be noted that, in a case where a polar group-containing compound is used as a compound, the compound can be graft-polymerized or attached to the natural rubber raw material by microwave irradiation without adding a radical forming agent (which will be described later), and on the other hand, in a case where a compound containing no polar group is used as a compound, addition of a radical forming agent makes it possible to graft-polymerize or attach the compound to the natural rubber raw material by microwave irradiation.

As the polar group-containing compound, a conventionally-known one can be used. Examples of such a polar group-containing compound include 2-aminoethanethiol, cysteine, histidine, imidazole, purine, acrylamide, 4-vinylaniline, methacrylic acid, acrylic acid, (anhydrous) maleic acid, (anhydrous) itaconic acid, vinyl acetate, 2-mercaptoethanol, and 3-mercapto-1-propanol. These compounds may be used alone or in combination of two or more of them.

As the compound containing no polar group, a conventionally-known one can be used. Examples of such a compound containing no polar group include styrene, substituted styrene, butadiene, vinylsilane, vinylcyclopropane, and derivatives thereof. These compounds may be used alone or in combination of two or more of them.

Examples of the polar group include an amino group, an imino group, an ammonium group, an imide group, an amide group, an azo group, a hydroxyl group, a carbonyl group, a carboxyl group, an epoxy group, a sulfide group, a disulfide group, and a thiocarbonyl group.

The compound is preferably added to the natural rubber raw material in such an amount that the amount of the compound graft-polymerized or attached to the natural rubber raw material is 0.01% by mass or more but 50% by mass or less of a solid rubber component contained in the natural rubber raw material. If the amount of the compound graft-polymerized or attached to the natural rubber raw material is less than 0.01% by mass of a solid rubber component contained in the natural rubber raw material, the characteristics of finally obtained rubber products such as tires tend to be insufficiently improved. On the other hand, if the amount of the compound graft-polymerized or attached to the natural rubber raw material exceeds 50% by mass of a solid rubber component contained in the natural rubber raw material, there is a fear that characteristics inherent in natural rubbers are lost.

### <Microwave>

In the present invention, microwave irradiation is carried out after the compound is added to the natural rubber raw material. As microwaves, for example, electromagnetic waves having a wavelength of 1 cm or more but 1 m or less (frequency: about 300 MHz to 30 GHz) can be used. Such microwave irradiation can be carried out using, for example, a conventionally-known microwave generator.

Heretofore, the use of microwaves has been limited to some applications such as radar and a heat source of microwave ovens. However, in recent years, it has been found that microwaves can be effectively used also in chemical processes. For example, it has been reported that when hydrolysis, esterification, or Diels-Alder addition reaction is carried out under microwave irradiation, the reaction rate is increased by one to three orders of magnitude and that microwaves exhibit specific stereoselectivity or positional selectivity.

Further, since microwaves are selectively absorbed by dipolar molecules, the polar group-containing compound described above can be selectively heated and activated by microwave irradiation. This makes it possible to graft-polymerize or attach the polar group-containing compound to the natural rubber raw material while generation of heat from the natural rubber raw material due to microwave irradiation is suppressed. That is, it is possible to produce a modified natural rubber while heat deterioration of the natural rubber raw material is suppressed.

Even in a case where a compound containing no polar group is added as the compound to the natural rubber raw material, addition of a radical forming agent makes it possible to graft-polymerize or attach the compound containing no polar group to the natural rubber raw material by microwave irradiation.

It is to be noted that an object irradiated with microwaves may be either in a latex state or a solid rubber state.

### <Radical Forming Agent>

In a case where a compound containing no polar group is used as the compound, a radical forming agent is added together with the compound containing no polar group to the natural rubber raw material. This makes it possible to graft-polymerize or attach the compound containing no polar group to the natural rubber raw material by microwave irradiation.

Examples of the radical forming agent include a peroxide-based radical forming agent, a redox-based radical forming agent, and an azo-based radical forming agent. These radical forming agents may be used alone or in combination of two or more of them.

Examples of the peroxide-based radical forming agent include benzoyl peroxide, di-t-butyl peroxide, potassium persulfate, ammonium persulfate, hydrogen peroxide, lauroyl peroxide, diisopropyl peroxycarbonate, and dicyclohexyl peroxycarbonate. These peroxide-based radical forming agents may be used alone or in combination of two or more of them.

Examples of the redox-based radical forming agent include a combination of cumenehydroxy peroxide with a Fe(II) salt, a combination of hydrogen peroxide with a Fe(II) salt, a combination of potassium persulfate or ammonium persulfate with sodium sulfite, a combination of sodium perchlorate with sodium sulfite, a combination of cerium sulfate(IV) with an alcohol, amine or starch, and a combination of a peroxide such as benzoyl peroxide or lauroyl peroxide with dimethylaniline. These redox-based radical forming agents may be used alone or in combination of two or more of them.

Examples of the azo-based radical forming agent include azobisisobutyronitrile, methyl azobisisobutyrate, azobis(cyclohexanecarbonitrile), azobisisobutylamidine hydrochloride, and 4,4'-azobis-4-cyanovaleric acid. These azo-based radical forming agents may be used alone or in combination of two or more of them.

### <Rubber Composition>

A rubber composition according to the present invention can be formed by, for example, mixing a modified natural rubber obtained in such a manner as described above and an additive (which will be described later) by, for example, kneading. Examples of such an additive include conventionally-known carbon black, silica, silane coupling agent, oil, stearic acid, zinc oxide, antioxidant, wax, sulfur, and vulcanization accelerator. Any one or more of these additives can be appropriately used.

### <Tire>

The use of the rubber composition according to the present invention is not limited to tire production, but the rubber composition according to the present invention is suitable for forming tire treads. Therefore, a tire according to the present invention will be described below with reference to a case where its tread is formed using the rubber composition according to the present invention.

First, the rubber composition according to the present invention containing, as a rubber component, a modified natural rubber obtained in such a manner as described above is formed into a predetermined shape by extrusion in an unvulcanized state to form a tire tread.

Then, a green tire is formed by arranging tire members including the tread formed using the rubber composition according to the present invention at their respective predetermined positions. Then, rubber compositions constituting the members of the green tire are vulcanized. In this way, a tire according to the present invention is produced.

Fig. 1 is a schematic sectional view of the upper-left half of a tire according to one embodiment of the present invention. A tire 1 includes a tread 2 serving as a ground contact surface of tire 1, a pair of side walls 3, and a pair of bead cores 5. Side walls 3 extend from the both edges of tread 2 inward in the radial direction of tire 1 to form the side faces of tire 1. Bead cores 5 are each located at the radially inward end of each of side walls 3. Further, a ply 6 extends between bead cores 5 and 5, and a belt 7 is provided outside ply 6 and inside tread 2.

Ply 6 can be formed from, for example, a rubber sheet in which a plurality of cords having an angle of, for example, 70° to 90° with respect to a tire equator CO (which is an imaginary line obtained by rotating the center of the width of the outer peripheral surface of tire 1 once in the circumferential direction of the outer peripheral surface of tire 1) are buried in a rubber composition. Further, ply 6 extends from tread 2 to bead core 5 through side wall 3, and is secured by folding back each end thereof around bead core 5 from inside to outside in the axial direction of tire 1.

Belt 7 can be formed from, for example, a rubber sheet in which a plurality of cords having an angle of, for example, 40° or less with respect to the tire equator CO are buried in a rubber composition.

If necessary, tire 1 may further include a band (not shown) for suppressing the peeling-off of belt 7. Here, the band is formed from, for example, a rubber sheet in which a plurality of cords are buried in a rubber composition, and can be provided by spirally winding it around the outside of belt 7 in substantially parallel with the tire equator CO.

Further, tire 1 includes also a pair of bead apexes 8 each extending from bead core 5 outward in the radial direction of tire 1 and an inner liner 9 provided inside ply 6. The outside of a folded-back portion of ply 6 is covered with side wall 3 and a clinch 4 extending from side wall 3 inward in the radial direction of tire 1.

It is to be noted that tire 1 according to the present invention described above is a tire for passenger cars. However, the present invention is not limited thereto, and can be applied to various tires for vehicles such as passenger cars, trucks, buses, and heavy vehicles.

In a case where a tire is produced using a tread formed from the rubber composition according to the present invention, as will be described later, it can be considered that the tire has excellent fracture resistance and abrasion resistance and low rolling resistance and exhibits excellent wet grip performance.

Therefore, the rubber composition according to the present invention is preferably used for forming a tire tread.

### Examples

### <Production Example 1>

200 g of a high ammonia-type natural rubber latex containing 60% by mass of rubber solid matter was diluted with a nonionic surfactant in an amount of 1% by mass of the rubber solid matter of the natural rubber latex and 2-aminoethanethiol in an amount of 0.05 mole per mole of rubber double bonds in the rubber solid matter of the natural rubber latex to reduce the concentration of the rubber solid matter contained in the natural rubber latex to 10% by mass. Then, the diluted natural rubber latex was transferred to another container, and was then irradiated with microwaves (frequency: 2.45 GHz) for 1 hour under conditions where the temperature of the container was 80°C and the power of microwave irradiation was 200 W. Here, MicroSYNTH manufactured by Milestone was used as a microwave generator.

After the completion of microwave irradiation, methanol was added to the natural rubber latex to separate a modified natural rubber and extract unreacted substances. Then, the natural rubber latex was dried under a reduced pressure to obtain a dried modified natural rubber A. The results of analyses of the modified natural rubber A are shown in Table 1.

As shown in Table 1, it was confirmed by the analysis of the modified natural rubber A using an apparatus for measuring trace total nitrogen that the amount of 2-aminoethanethiol attached to the natural rubber latex was 0.027 mole per mole of rubber double bonds in the rubber solid matter of the natural rubber latex. Further, as shown in Table 1, it was also confirmed by measurement of a toluene-insoluble fraction that the gel content of the modified natural rubber A was 28% by mass. Further, it was also confirmed by gel permeation chromatography (GPC) that the modified natural rubber A had a weight average molecular weight (Mw) of 1.2 × 10⁶.

### <Production Example 2>

A modified natural rubber (a modified natural rubber B) was produced in the same manner as in Production Example 1 except that the amount of 2-aminoethanethiol added to the natural rubber latex was changed to 0.1 mole per mole of rubber double bonds in the rubber solid matter of the natural rubber latex. The results of analyses of the modified natural rubber B are shown in Table 1.

As shown in Table 1, it was confirmed by the analysis of the modified natural rubber B using an apparatus for measuring trace total nitrogen that the amount of 2-aminoethanethiol attached to the natural rubber latex was 0.058 mole per mole of rubber double bonds in the rubber solid matter of the natural rubber latex. Further, as shown in Table 1, it was also confirmed by measurement of a toluene-insoluble fraction that the gel content of the modified natural rubber B was 27% by mass. Further, it was also confirmed by gel permeation chromatography (GPC) that the modified natural rubber B had a weight average molecular weight (Mw) of 1.1 × 10⁶.

### <Production Example 3>

A modified natural rubber (a modified natural rubber C) was produced in the same manner as in Production Example 1 except that the amount of 2-aminoethanethiol added to the natural rubber latex was changed to 0.15 mole per mole of rubber double bonds in the rubber solid matter of the natural rubber latex. The results of analyses of the modified natural rubber C are shown in Table 1.

As shown in Table 1, it was confirmed by the analysis of the modified natural rubber C using an apparatus for measuring trace total nitrogen that the amount of 2-aminoethanethiol attached to the natural rubber latex was 0.089 mole per mole of rubber double bonds in the rubber solid matter of the natural rubber latex. Further, as shown in Table 1, it was also confirmed by measurement of a toluene-insoluble fraction that the gel content of the modified natural rubber C was 26% by mass. Further, it was also confirmed by gel permeation chromatography (GPC) that the modified natural rubber C had a weight average molecular weight (Mw) of 1.2 × 10⁶.

### <Production Example 4>

A modified natural rubber (a modified natural rubber D) was produced in the same manner as in Production Example 1 except that the amount of 2-aminoethanethiol added to the natural rubber latex was changed to 0.25 mole per mole of rubber double bonds in the rubber solid matter of the natural rubber latex. The results of analyses of the modified natural rubber D are shown in Table 1.

As shown in Table 1, it was confirmed by the analysis of the modified natural rubber D using an apparatus for measuring trace total nitrogen that the amount of 2-aminoethanethiol attached to the natural rubber latex was 0.146 mole per mole of rubber double bonds in the rubber solid matter of the natural rubber latex. Further, as shown in Table 1, it was also confirmed by measurement of a toluene-insoluble fraction that the gel content of the modified natural rubber D was 26% by mass. Further, it was also confirmed by gel permeation chromatography (GPC) that the modified natural rubber D had a weight average molecular weight (Mw) of 1.2 × 10⁶.

### <Production Example 5>

A modified natural rubber (a modified natural rubber E) was produced in the same manner as in Production Example 1 except that the power of microwave irradiation was changed to 100 W. The results of analyses of the modified natural rubber E are shown in Table 1.

As shown in Table 1, it was confirmed by the analysis of the modified natural rubber E using an apparatus for measuring trace total nitrogen that the amount of 2-aminoethanethiol attached to the natural rubber latex was 0.026 mole per mole of rubber double bonds in the rubber solid matter of the natural rubber latex. Further, as shown in Table 1, it was also confirmed by measurement of a toluene-insoluble fraction that the gel content of the modified natural rubber E was 27% by mass. Further, it was also confirmed by gel permeation chromatography (GPC) that the modified natural rubber E had a weight average molecular weight (Mw) of 1.2 × 10⁶.

### <Production Example 6>

A modified natural rubber (a modified natural rubber F) was produced in the same manner as in Production Example 1 except that the power of microwave irradiation was changed to 400 W. The results of analyses of the modified natural rubber F are shown in Table 1.

As shown in Table 1, it was confirmed by the analysis of the modified natural rubber F using an apparatus for measuring trace total nitrogen that the amount of 2-aminoethanethiol attached to the natural rubber latex was 0.032 mole per rubber double bonds in the rubber solid matter of the natural rubber latex. Further, as shown in Table 1, it was also confirmed by measurement of a toluene-insoluble fraction that the gel content of the modified natural rubber F was 25% by mass. Further, it was also confirmed by gel permeation chromatography (GPC) that the modified natural rubber F had a weight average molecular weight (Mw) of 1.1 × 10⁶.

### <Production Example 7>

A modified natural rubber (a modified natural rubber G) was produced in the same manner as in Production Example 1 except that cysteine was added instead of 2-aminoethanethiol to the natural rubber latex in an amount of 0.05 mole per mole of rubber double bonds in the rubber solid matter of the natural rubber latex. The results of analyses of the modified natural rubber G are shown in Table 1.

As shown in Table 1, it was confirmed by the analysis of the modified natural rubber G using an apparatus for measuring trace total nitrogen that the amount of cysteine attached to the natural rubber latex was 0.027 mole per mole of rubber double bonds in the rubber solid matter of the natural rubber latex. Further, as shown in Table 1, it was also confirmed by measurement of a toluene-insoluble fraction that the gel content of the modified natural rubber G was 26% by mass. Further, it was also confirmed by gel permeation chromatography (GPC) that the modified natural rubber G had a weight average molecular weight (Mw) of 1.2 × 10⁶.

### <Production Example 8>

A modified natural rubber (a modified natural rubber H) was produced in the same manner as in Production Example 1 except that histidine was added instead of 2-aminoethanethiol to the natural rubber latex in an amount of 0.05 mole per mole of rubber double bonds in the rubber solid matter of the natural rubber latex. The results of analyses of the modified natural rubber H are shown in Table 1.

As shown in Table 1, it was confirmed by the analysis of the modified natural rubber H using an apparatus for measuring trace total nitrogen that the amount of histidine attached to the natural rubber latex was 0.029 mole per mole of rubber double bonds in the rubber solid matter of the natural rubber latex. Further, as shown in Table 1, it was also confirmed by measurement of a toluene-insoluble fraction that the gel content of the modified natural rubber H was 27% by mass. Further, it was also confirmed by gel permeation chromatography (GPC) that the modified natural rubber H had a weight average molecular weight (Mw) of 1.2 × 10⁶.

### <Production Example 9>

2-aminoethanethiol was added to a commercially-available solid natural rubber (TSR-10) in an amount of 0.05 mole per mole of rubber double bonds in the solid natural rubber (TSR-10) to obtain a mixture, and the mixture was uniformly mixed using an open roll. Then, the mixture was irradiated with microwaves (frequency: 2.45 GHz) at an irradiation power of 200 W for 1 hour.

After the completion of microwave irradiation, unreacted substances were extracted from the mixture. Then, the mixture was dried under a reduced pressure to obtain a dried modified natural rubber I. The results of analyses of the modified natural rubber I are shown in Table 1.

As shown in Table 1, it was confirmed by the analysis of the modified natural rubber I using an apparatus for measuring trace total nitrogen that the amount of 2-aminoethanethiol attached to the solid natural rubber (TSR-10) was 0.035 mole per mole of rubber double bonds of the solid natural rubber (TSR-10). Further, as shown in Table 1, it was also confirmed by measurement of a toluene-insoluble fraction that the gel content of the modified natural rubber I was 44% by mass. Further, it was also confirmed by gel permeation chromatography (GPC) that the modified natural rubber I had a weight average molecular weight (Mw) of 1.4 × 10⁶.

### <Production Example 10>

A modified natural rubber (a modified natural rubber J) was produced in the same manner as in Production Example 9 except that histidine was added instead of 2-aminoethanethiol to the solid natural rubber (TSR-10) in an amount of 0.05 mole per mole of rubber double bonds of the solid natural rubber (TSR-10). The results of analyses of the modified natural rubber J are shown in Table 1.

As shown in Table 1, it was confirmed by the analysis of the modified natural rubber J using an apparatus for measuring trace total nitrogen that the amount of histidine attached to the solid natural rubber (TSR-10) was 0.033 mole per mole of rubber double bonds of the solid natural rubber (TSR-10). Further, as shown in Table 1, it was also confirmed by measurement of a toluene-insoluble fraction that the gel content of the modified natural rubber J was 46% by mass. Further, it was also confirmed by gel permeation chromatography (GPC) that the modified natural rubber J had a weight average molecular weight (Mw) of 1.4 × 10⁶.

### <Production Example 11>

An unmodified natural rubber (an unmodified natural rubber A) was produced in the same manner as in Production Example 1 except that no 2-aminoethanethiol was added. The results of analyses of the unmodified natural rubber A are shown in Table 1.

As shown in Table 1, it was confirmed by measurement of a toluene-insoluble fraction that the gel content of the unmodified natural rubber A was 27% by mass. Further, it was also confirmed by gel permeation chromatography (GPC) that the weight average molecular weight (Mw) of the unmodified natural rubber A was 1.2 × 10⁶.

### <Production Example 12>

An unmodified natural rubber (an unmodified natural rubber B) was produced in the same manner as in Production Example 1 except that the natural rubber latex was changed to a solid natural rubber (TSR-10) and that no 2-aminoethanethiol was added. The results of analyses of the unmodified natural rubber B are shown in Table 1.

As shown in Table 1, it was confirmed by measurement of a toluene-insoluble fraction that the gel content of the unmodified natural rubber B was 45% by mass. Further, it was also confirmed by gel permeation chromatography (GPC) that the weight average molecular weight (Mw) of the unmodified natural rubber B was 1.4 × 10⁶.

**Table 1**

| | Product | Natural Rubber Raw Material | Compound | Amount of Compound Added (mol) | Irradiation Power (W) | Amount of Compound Attached (mol) | Gel Content (% by mass) | Molecular Weight (Mw) |
|---|---|---|---|---|---|---|---|---|
| Production Example 1 | Modified Natural Rubber A | Natural Rubber Latex | 2-aminoetha nethiol | 0.05 | 200 | 0.027 | 28 | 1.2 × 10⁶ |
| Production Example 2 | Modified Natural Rubber B | Natural Rubber Latex | 2-aminoetha nethiol | 0.10 | 200 | 0.058 | 27 | 1.1 × 10⁶ |
| Production Example 3 | Modified Natural Rubber C | Natural Rubber Latex | 2-aminoetha nethiol | 0.15 | 200 | 0.089 | 26 | 1.2 × 10⁶ |
| Production Example 4 | Modified Natural Rubber D | Natural Rubber Latex | 2-aminoetha nethiol | 0.25 | 200 | 0.146 | 26 | 1.2 × 10⁶ |
| Production Example 5 | Modified Natural Rubber E | Natural Rubber Latex | 2-aminoetha nethiol | 0.05 | 100 | 0.026 | 27 | 1.2 × 10⁶ |
| Production Example 6 | Modified Natural Rubber F | Natural Rubber Latex | 2-aminoetha nethiol | 0.05 | 400 | 0.032 | 25 | 1.1 × 10⁶ |
| Production Example 7 | Modified Natural Rubber G | Natural Rubber Latex | Cysteine | 0.05 | 200 | 0.027 | 26 | 1.2 × 10⁶ |
| Production Example 8 | Modified Natural Rubber H | Natural Rubber Latex | Histidine | 0.05 | 200 | 0.029 | 27 | 1.2 × 10⁶ |
| Production Example 9 | Modified Natural Rubber I | Solid Natural Rubber (TSR-10) | 2-aminoetha nethiol | 0.05 | 200 | 0.035 | 44 | 1.4 × 10⁶ |
| Production Example 10 | Modified Natural Rubber J | Solid Natural Rubber (TSR-10) | Histidine | 0.05 | 200 | 0.033 | 46 | 1.4 × 10⁶ |
| Production Example 11 | Unmodified Natural Rubber A | Natural Rubber Latex | - | - | 200 | - | 27 | 1.2 × 10⁶ |
| Production Example 12 | Unmodified Natural Rubber B | Solid Natural Rubber (TSR-10) | - | - | 200 | - | 45 | 1.4 × 10⁶ |

### <Preparation of Vulcanized Rubber Composition>

Vulcanized rubber compositions of Examples 1 to 20 and Comparative Examples 1 to 6 were each prepared by blending its ingredients according to the formulation 1 or 2 shown in Table 2, kneading the ingredients using a compact plastomill to obtain a mixture, and subjecting the mixture to press vulcanization at 160°C for 20 minutes. It is to be noted that in Table 2 showing the formulations 1 and 2, the blending amount of each ingredient is expressed in parts by mass.

Here, the vulcanized rubber compositions of Examples 1 to 10 and Comparative Examples 1 to 3 were prepared according to the formulation 1, and the vulcanized rubber compositions of Examples 11 to 20 and Comparative Examples 4 to 6 were prepared according to the formulation 2.

Further, the vulcanized rubber compositions of Examples 1 and 11 were prepared using the modified natural rubber A as a rubber component, and the vulcanized rubber compositions of Examples 2 and 12 were prepared using the modified natural rubber B as a rubber component.

Further, the vulcanized rubber compositions of Examples 3 and 13 were prepared using the modified natural rubber C as a rubber component, and the vulcanized rubber compositions of Examples 4 and 14 were prepared using the modified natural rubber D as a rubber component.

Further, the vulcanized rubber compositions of Examples 5 and 15 were prepared using the modified natural rubber E as a rubber component, and the vulcanized rubber compositions of Examples 6 and 16 were prepared using the modified natural rubber F as a rubber component.

Further, the vulcanized rubber compositions of Examples 7 and 17 were prepared using the modified natural rubber G as a rubber component, and the vulcanized rubber compositions of Examples 8 and 18 were prepared using the modified natural rubber H as a rubber component.

Further, the vulcanized rubber compositions of Examples 9 and 19 were prepared using the modified natural rubber I as a rubber component, and the vulcanized rubber compositions of Examples 10 and 20 were prepared using the modified natural rubber J as a rubber component.

The vulcanized rubber compositions of Comparative Examples 1 and 4 were prepared using the unmodified natural rubber A as a rubber component, and the vulcanized rubber compositions of Comparative Examples 2 and 5 were prepared using the unmodified natural rubber B as a rubber component.

The vulcanized rubber compositions of Comparative Examples 3 and 6 were prepared using an untreated commercially-available solid natural rubber (TSR-10) as a rubber component.

**Table 2**

| | Formulation 1 | Formulation 2 |
|---|---|---|
| Rubber Component | 100 | 100 |
| Carbon Black^{(*1)} | 50 | 0 |
| Silica^{(*2)} | 0 | 60 |
| Silane Coupling Agent^{(*3)} | 0 | 5 |
| Aromatic Oil^{(*4)} | 5 | 5 |
| Stearic Acid^{(*5)} | 1 | 1 |
| Zinc Oxide^{(*6)} | 3 | 3 |
| Antioxidant^{(*7)} | 2 | 2 |
| Wax^{(*8)} | 1 | 1 |
| Sulfur^{(*9)} | 1.5 | 2 |
| Vulcanization Accelerator BBS^{(*10)} | 1.5 | 2 |

| | | |
|---|---|---|
| *1 1 carbon black: DIA BLACK A manufactured by Mitsubishi Chemical Corporation *2 silica: VN3 (BET: 175 m²/g) manufactured by Degussa Japan *3 silane coupling agent: Si-69 (bis(3-triethoxysilylpropyl)tetrasulfide) manufactured by Degussa *4 aromatic oil: Diana Process PS32 manufactured by Idemitsu Kosan Co., Ltd. *5 stearic acid: stearic acid manufactured by NOF Corporation *6 zinc oxide: Zinc Oxide No. 1 manufactured by Mitsui Mining & Smelting Co., Ltd. *7 antioxidant: NOCRAC 6C manufactured by Ouchi Shinko Chemical Industrial Co., Ltd. *8 wax: SUNNOC Wax manufactured by Ouchi Shinko Chemical Industrial Co., Ltd. *9 sulfur: sulfur powder manufactured by Tsurumi Chemical Industry Co., Ltd. *10 vulcanization accelerator BBS: NOCCELER NS manufactured by Ouchi Shinko Chemical Industrial Co., Ltd. | | |

### <Tensile Strength>

JIS No. 3 dumbbell test specimens were prepared using the vulcanized rubber compositions of Examples 1 to 20 and Comparative Examples 1 to 6, respectively, and then tensile test was carried out using each of the dumbbell test specimens according to JIS-K6251 "Rubber, vulcanized or thermoplastic - Determination of tensile stress-strain properties" to measure the strength at break of the test specimen. The measured strength at break was defined as tensile strength Tb (MPa). The measurement results are shown in a column headed "Tb (MPa)" in Tables 3 and 4. In the column headed "Tb (MPa)" in Tables 3 and 4, a larger value indicates a larger tensile strength.

### <Rolling Resistance>

Rubber slab sheets each having a thickness of 2 mm, a width of 130 mm, and a length of 130 mm were prepared using the vulcanized rubber compositions of Examples 1 to 20 and Comparative Examples 1 to 6, respectively, and then a test specimen was cut out from each of the rubber slab sheets. The loss tangent (tan δ) of the test specimen was measured using a viscoelasticity spectrometer VES (manufactured by Iwamoto Seisakusho K.K.) under the conditions where the temperature was 70°C, the initial strain was 10%, and the dynamic strain was 2%. The measurement results are shown in a column headed "tan 5" in Tables 3 and 4. In the column headed "tan δ" in Tables 3 and 4, a smaller value indicates lower rolling resistance.

### <Hardness>

The hardness of each of the vulcanized rubber compositions of Examples 1 to 20 and Comparative Examples 1 to 6 was measured using a Type A durometer according to JIS-K6253 "Rubber, vulcanized or thermoplastic - Determination of hardness". The measurement results are shown in a column headed "hardness" in Tables 3 and 4. In the column headed "hardness" in Tables 3 and 4, a larger value indicates a higher hardness.

### <Abrasion Resistance>

Vulcanized rubber test specimens for Lambourn abrasion test were prepared using the vulcanized rubber compositions of Examples 1 to 20 and Comparative Examples 1 to 6, respectively, and then the amount of Lambourn abrasion of each of the test specimens was measured using a Lambourn abrasion tester to determine the amount of volume loss of each of the test specimens.

The abrasion resistance index of each of the test specimens prepared using the vulcanized rubber compositions of Examples 1 to 10 and Comparative Examples 1 to 3 was calculated by the following formula (1): Abrasion resistance index = 100 × (amount of volume loss of test specimen of Comparative Example 1)/(amount of volume loss of each of test specimens of Examples 1 to 10 and Comparative Examples 1 to 3). The abrasion resistance index of each of the test specimens prepared using the vulcanized rubber compositions of Examples 11 to 20 and Comparative Examples 4 to 6 was calculated by the following formula (2): Abrasion resistance index = 100 × (amount of volume loss of test specimen of Comparative Example 4)/(amount of volume loss of each of test specimens of Examples 11 to 20 and Comparative Examples 4 to 6). The results are shown in a column headed "abrasion resistance index" in Tables 3 and 4. In the column headed "abrasion resistance index" in Tables 3 and 4, a larger value indicates higher abrasion resistance.

### <Wet Grip Performance>

Test specimens were prepared using the vulcanized rubber compositions of Examples 1 to 20 and Comparative Examples 1 to 6, respectively. The maximum coefficient of friction of each of the test specimens was measured using a portable skid tester manufactured by Stanley in accordance with ASTM E303-83.

The wet grip performance index of each of the test specimens prepared using the vulcanized rubber compositions of Examples 1 to 10 and Comparative Examples 1 to 3 was calculated by the following formula (3): Wet grip performance index = 100 × (maximum coefficient of friction of test specimen of Comparative Example 1)/(maximum coefficient of friction of each of test specimens of Examples 1 to 10 and Comparative Examples 1 to 3). The wet grip performance index of each of the test specimens prepared using the vulcanized rubber compositions of Examples 11 to 20 and Comparative Examples 4 to 6 was calculated by the following formula (4): Wet grip performance index = 100 × (maximum coefficient of friction of test specimen of Comparative Example 4)/(maximum coefficient of friction of each of test specimens of Examples 11 to 20 and Comparative Examples 4 to 6). The results are shown in a column headed "wet grip performance index" in Tables 3 and 4. In the column headed "wet grip performance index" in Tables 3 and 4, a larger value indicates higher wet grip performance.

**Table 3**

| | Formulation | Rubber Component | Tb (MPa) | tan δ | Hardness | Abrasion Resistance Index | Wet Grip Performance Index |
|---|---|---|---|---|---|---|---|
| Example 1 | Formulation 1 | Modified Natural Rubber A | 27.7 | 0.148 | 66 | 118 | 103 |
| Example 2 | Formulation 1 | Modified Natural Rubber B | 28.1 | 0.144 | 65 | 116 | 102 |
| Example 3 | Formulation 1 | Modified Natural Rubber C | 26.8 | 0.143 | 66 | 119 | 103 |
| Example 4 | Formulation 1 | Modified Natural Rubber D | 26.9 | 0.144 | 65 | 121 | 102 |
| Example 5 | Formulation 1 | Modified Natural Rubber E | 26.7 | 0.139 | 65 | 117 | 101 |
| Example 6 | Formulation 1 | Modified Natural Rubber F | 27.7 | 0.142 | 65 | 118 | 100 |
| Example 7 | Formulation 1 | Modified Natural Rubber G | 27.3 | 0.143 | 65 | 118 | 101 |
| Example 8 | Formulation 1 | Modified Natural Rubber H | 26.6 | 0.147 | 66 | 116 | 102 |
| Example 9 | Formulation 1 | Rubber I Rubber I | 27.2 | 0.145 | 65 | 121 | 104 |
| Example 10 | Formulation 1 | Modified Natural Rubber J | 27.3 | 0.145 | 66 | 117 | 103 |
| Comparative Example 1 | Formulation 1 | Unmodified A Natural Rubber A | 26.1 | 0.183 | 66 | 100 | 100 |
| Comparative Example 2 | Formulation 1 | Unmodified Natural Rubber B | 26.5 | 0.188 | 65 | 96 | 100 |
| Comparative Example 3 | Formulation 1 | solid Natural Rubber (TSR-10) | 26.6 | 0.189 | 66 | 97 | 99 |

**Table 4**

| | Formulation | Rubber Component | Tb (MPa) | tan δ | Hardness | Abrasion Resistance Index | Wet Grip Performance Index |
|---|---|---|---|---|---|---|---|
| Example 11 | Formulation 2 | Modified Natural Rubber A | 25.6 | 0.112 | 59 | 115 | 104 |
| Example 12 | Formulation 2 | Modified Natural Rubber B | 25.3 | 0.114 | 59 | 113 | 105 |
| Example 13 | Formulation 2 | Modified Natural Rubber C | 25.6 | 0.115 | 59 | 113 | 104 |
| Example | 14 Formulation 2 | Modified Natural Rubber D | 24.9 | 0.111 | 58 | 111 | 103 |
| Example 15 | Formulation 2 | Modified Natural Rubber E | 25.7 | 0.111 | 60 | 117 | 103 |
| Example 16 | Formulation 2 | Modified Natural Rubber F | 25.1 | 0.113 | 60 | 116 | 102 |
| Example 17 | Formulation 2 | Modified Natural Rubber G | 25.1 | 0.109 | 60 | 116 | 101 |
| Example 18 | Formulation 2 | Modified Natural Rubber H | 24.7 | 0.117 | 59 | 117 | 102 |
| Example 19 | Formulation 2 | Modified Natural Rubber I | 25.5 | 0.116 | 60 | 116 | 102 |
| Example 20 | Formulation 2 | Modified Natural Rubber J | 25.4 | 0.117 | 59 | 115 | 100 |
| Comparative Example 4 | Formulation 2 | Unmodified Natural Rubber A | 23.2 | 0.142 | 58 | 100 | 100 |
| Comparative Example 5 | Formulation 2 | Unmodified Natural Rubber B | 22.7 | 0.146 | 57 | 99 | 101 |
| Comparative Example 6 | Formulation 2 | Solid Natural Rubber (TSR-10) | 22.9 | 0.149 | 57 | 97 | 99 |

### <Evaluation>

As shown in Table 3, the vulcanized rubber compositions of Examples 1 to 10 each containing, as a rubber component, a modified natural rubber produced by attaching a predetermined compound to a natural rubber had a larger tensile strength Tb, a smaller tan δ value, a larger abrasion resistance index, and a larger wet grip performance index as compared to the vulcanized rubber compositions of Comparative Examples 1 to 3 each containing, as a rubber component, an unmodified natural rubber.

From the results, it was confirmed that the vulcanized rubber compositions of Examples 1 to 10 each containing, as a rubber component, a modified natural rubber produced by attaching a predetermined compound to a natural rubber had higher fracture resistance, abrasion resistance, and wet grip performance and lower rolling resistance as compared to the vulcanized rubber compositions of Comparative Examples 1 to 3 each containing, as a rubber component, an unmodified natural rubber.

Further, as shown in Table 4, the vulcanized rubber compositions of Examples 11 to 20 each containing, as a rubber component, a modified natural rubber produced by attaching a predetermined compound to a natural rubber had a larger tensile strength Tb, a smaller tan δ value, a larger abrasion resistance index, and a larger wet grip performance index as compared to the vulcanized rubber compositions of Comparative Examples 4 to 6 each containing, as a rubber component, an unmodified natural rubber.

From the results, it was confirmed that the vulcanized rubber compositions of Examples 11 to 20 each containing, as a rubber component, a modified natural rubber produced by attaching a predetermined compound to a natural rubber had higher fracture resistance, abrasion resistance, and wet grip performance and lower rolling resistance as compared to the vulcanized rubber compositions of Comparative Examples 4 to 6 each containing, as a rubber component, an unmodified natural rubber.

From the above results, it can be considered that the vulcanized rubber compositions of Examples 1 to 20 are suitable for forming tire treads.

Further, as described above, the above modified natural rubbers were produced by modifying a natural rubber through microwave irradiation. This makes it possible to suppress the generation of heat from the natural rubber as compared to a case where the natural rubber is modified through the application of mechanical shear force. Therefore, the above modified natural rubbers could be produced by modifying a natural rubber while heat deterioration of the natural rubber was suppressed.

The modified natural rubber according to the present invention is preferably used to produce rubber products such as tire treads.

## Claims

1. A modified natural rubber obtained by adding a compound to at least one natural rubber raw material selected from the group consisting of a solid natural rubber, a natural rubber latex, and a natural rubber derivative and then irradiating the mixture of said natural rubber raw material and said compound with microwaves to graft-polymerize or attach said compound to said natural rubber raw material.

2. The modified natural rubber according to claim 1, wherein an amount of said compound graft-polymerized or attached to said natural rubber raw material is 0.01% by mass or more but 50% by mass or less of a solid rubber component contained in said natural rubber raw material.

3. The modified natural rubber according to claim 1, wherein said compound has a polar group.

4. The modified natural rubber according to claim 1, wherein a radical forming agent is added together with said compound to said natural rubber raw material to graft-polymerize or attach said compound to said natural rubber raw material by microwave irradiation.

5. A method for producing a modified natural rubber, comprising the steps of:
adding a compound to at least one natural rubber raw material selected from the group consisting of a solid natural rubber, a natural rubber latex, and a natural rubber derivative; and
irradiating the mixture of said natural rubber raw material and said compound with microwaves to graft-polymerize or attach said compound to said natural rubber raw material.

6. The method for producing a modified natural rubber according to claim 5, wherein said compound has a polar group.

7. The method for producing a modified natural rubber according to claim 5, wherein a radical forming agent is added together with said compound to said natural rubber raw material before microwave irradiation.

8. A rubber composition comprising at least one of the modified natural rubber according to claim 1 and a modified natural rubber produced by the method for producing a modified natural rubber according to claim 5.

9. A tire comprising a tire member formed using the rubber composition according to claim 8.

## Patentansprüche

1. Modifizierter Naturkautschuk erhalten durch Zugabe einer Verbindung zu wenigstens einem Naturkautschukrohmaterial, das aus der Gruppe ausgewählt ist, welche aus einem festen Naturkautschuk, einem Naturkautschuklatex und einem Naturkautschukderivat besteht, und dann durch Bestrahlen der Mischung des Naturkautschukrohmaterials und der Verbindung mit Mikrowellen, um die Verbindung an das Naturkautschukrohmaterial zu pfropfpolymerisieren oder anzuhängen.

2. Modifizierter Naturkautschuk nach Anspruch 1, wobei die Menge der an das Naturkautschukrohmaterial pfropfpolymerisierten oder angehängten Verbindung 0,01 Massen-% oder mehr, aber 50 Massen-% oder weniger bezogen auf die in dem Naturkautschukrohmaterial enthaltene feste Kautschukkomponente beträgt.

3. Modifizierter Naturkautschuk nach Anspruch 1, wobei die Verbindung eine polare Gruppe aufweist.

4. Modifizierter Naturkautschuk nach Anspruch 1, wobei dem Naturkautschukrohmaterial zusammen mit der Verbindung ein Radikal bildendes Mittel zugegeben wird, um die Verbindung an das Naturkautschukrohmaterial durch Mikrowellenbestrahlung zu pfropfpolymerisieren oder anzuhängen.

5. Verfahren zum Herstellen eines modifizierten Naturkautschuks, welches die nachfolgenden Schritte umfasst:
Zugabe einer Verbindung zu wenigstens einem Naturkautschukrohmaterial, das aus der Gruppe ausgewählt wird, welche aus einem festen Naturkautschuk, einem Naturkautschuklatex und einem Naturkautschukderivat besteht, sowie
Bestrahlen der Mischung des Naturkautschukrohmaterials und der Verbindung mit Mikrowellen, um die Verbindung an das Naturkautschukrohmaterial zu pfropfpolymerisieren oder anzuhängen.

6. Verfahren zum Herstellen eines modifizierten Naturkautschuks nach Anspruch 5, wobei die Verbindung eine polare Gruppe aufweist.

7. Verfahren zum Herstellen eines modifizierten Naturkautschuks nach Anspruch 5, wobei dem Naturkautschukrohmaterial vor der Mikrowellenbestrahlung zusammen mit der Verbindung ein Radikal bildendes Mittel zugegeben wird.

8. Kautschukzusammensetzung, welche wenigstens einen eines modifizierten Naturkautschuks nach Anspruch 1 und eines modifizierten Naturkautschuks, welcher durch ein Verfahren zum Herstellen eines modifizierten Naturkautschuks nach Anspruch 5 hergestellt worden ist, enthält.

9. Reifen, welcher ein Reifenelement enthält, welches unter Verwendung der Kautschukzusammensetzung nach Anspruch 8 ausgebildet worden ist.

## Revendications

1. Caoutchouc naturel modifié obtenu par addition d'un composé à au moins une matière première de caoutchouc naturel choisie dans le groupe constitué d'un caoutchouc naturel solide, d'un latex de caoutchouc naturel et d'un dérivé de caoutchouc naturel et par irradiation subséquente du mélange de ladite matière première de caoutchouc naturel et dudit composé avec des micro-ondes pour polymériser par greffage ou fixer ledit composé à ladite matière première de caoutchouc naturel.

2. Caoutchouc naturel modifié selon la revendication 1, dans lequel une quantité dudit composé polymérisé par greffage ou fixé à ladite matière première de caoutchouc naturel est de 0,01 % en masse ou plus mais de 50 % en masse ou moins d'un constituant de caoutchouc solide contenu dans ladite matière première de caoutchouc naturel.

3. Caoutchouc naturel modifié selon la revendication 1, dans lequel ledit composé présente un groupe polaire.

4. Caoutchouc naturel modifié selon la revendication 1, dans lequel un agent formant un radical est ajouté avec ledit composé à ladite matière première de caoutchouc naturel pour polymériser par greffage ou fixer ledit composé à ladite matière première de caoutchouc naturel par une irradiation avec des micro-ondes.

5. Procédé de production d'un caoutchouc naturel modifié comprenant les étapes consistant :
à ajouter un composé à au moins une matière première de caoutchouc naturel choisie dans le groupe constitué d'un caoutchouc naturel solide, d'un latex de caoutchouc naturel et d'un dérivé de caoutchouc naturel ; et
à irradier le mélange de ladite matière première de caoutchouc naturel et dudit composé avec des micro-ondes pour polymériser par greffage ou fixer ledit composé à ladite matière première de caoutchouc naturel.

6. Procédé de production d'un caoutchouc naturel modifié selon la revendication 5, dans lequel ledit composé présente un groupe polaire.

7. Procédé de production d'un caoutchouc naturel modifié selon la revendication 5, dans lequel un agent formant un radical est ajouté avec ledit composé à ladite matière première de caoutchouc naturel avant l'irradiation avec des micro-ondes.

8. Composition de caoutchouc comprenant au moins un parmi le caoutchouc naturel modifié selon la revendication 1 et un caoutchouc naturel modifié produit par le procédé de production d'un caoutchouc naturel modifié selon la revendication 5.

9. Pneu comprenant un élément de pneu formé en utilisant la composition de caoutchouc selon la revendication 8.
